# EUROPÄISCHE PATENTSCHRIFT

(11) **EP 2 118 557 B1**
(45) Veröffentlichungstag und Bekanntmachung des Hinweises auf die Patenterteilung: **02.06.2010**
(21) Anmeldenummer: 08701104.5
(22) Anmeldetag: 15.01.2008
(51) Int. Cl.: F17C 9/02, F17C 7/04, F17C 5/00

(54) **SPEICHERBEHÄLTER FÜR TIEFKALTES FLÜSSIGGAS MIT EINER ENTNAHMEVORRICHTUNG**
RESERVOIR FOR DEEP-FROZEN LIQUEFIED GAS, COMPRISING A REMOVING DEVICE
RÉSERVOIR DE GAZ LIQUIDE TRÈS FROID ET DOTÉ D'UN DISPOSITIF DE PRÉLÈVEMENT

(30) Priorität: 17.01.2007 AT 282007 U
(43) Veröffentlichungstag der Anmeldung: 18.11.2009
(73) Patentinhaber: Magna Steyr Fahrzeugtechnik AG & Co. KG, 8041 Graz (AT)
(72) Erfinder: EMANS, Maximilian, A-8010 Graz (AT); REINITZHUBER, Bernhard, A-8010 Graz (AT)
(74) Vertreter: Harringer, Thomas
(86) Internationale Anmeldenummer: PCT/EP2008/000241
(87) Internationale Veröffentlichungsnummer: WO 2008/086999

(56) Entgegenhaltungen:
- EP-A- 1 600 686
- EP-A- 1 726 869
- DE-A1- 4 320 556
- DE-A1- 19 934 457
- DE-A1-102005 028 199
- GB-A- 950 064
- JP-A- 55 010 148
- US-A- 2 842 942

## Beschreibung

Die Erfindung betrifft Speicherbehälter für tiefkaltes Flüssiggas mit einer Entnahmevorrichtung, die aus einem Entnahmezweig und einem Rückführzweig besteht, wobei der Entnahmezweig von einer in den Behälter eintauchenden Entnahmeleitung gebildet ist, die über einen Wärmetauscher und eine Abzweige zum Verbraucher führt und wobei der Rückführzweig von der Abzweige über einen Kompressor zu einer Einblasvorrichtung im Behälter führt.

Der Begriff "Gas" wird im folgenden ohne Ansehen des Aggregatszustandes verwendet, somit als Dachbegriff für das Medium im gasförmigen und im flüssigen Aggregatszustand, im folgenden als Flüssiggas und als gasförmiges Gas bezeichnet. Dementsprechend hat der mit Gas gefüllte Speicherbehälter eine Flüssigkeitszone und darüber eine Gaszone.

Die Speicherung von Gasen, insbesondere von Wasserstoff, im tiefkalten Zustand scheint hinsichtlich Energiedichte besonders geeignet für den mobilen Einsatz, insbesondere in Kraftfahrzeugen. Damit werden Emissionen minimiert und große Reichweiten erzielt. Die Umsetzung in Antriebsenergie erfolgt dann entweder in einer Verbrennungskraftmaschine oder mittels Brennstoffzellen und Elektromotor.

Nebst den allgemein mit der Speicherung und Handhabung kryogener Medien verbundenen Problemen stellen sich speziell für den mobilen Einsatz noch weitere: Die im Fahrbetrieb laufend, und oft sehr schnell, nötige Änderung der entnommenen Gasmenge und die Konstanthaltung des im Speicherbehälter herrschenden Druckes, insbesondere wenn dieser für die Aufrechterhaltung des Fahrbetriebes einen bestimmten Wert nicht unterschreiten darf.

### Stand der Technik

Zur Entnahme aus dem Speicherbehälter wird der Druck in dessen Innerem erhöht, was üblicherweise durch Beheizung des Behälterinhaltes, entweder mit Fremdenergie oder durch einen im Speicherbehälter angeordneten Wärmetauscher erfolgt, der von bereits verdampftem Gas durchströmt ist. Die dazu erforderlichen Rohrleitungen müssen durch die Behälterwände hindurch geführt sein, was die Herstellung verteuert und den bei Stillstand des Fahrzeuges unerwünschten Wärmeeinfall erhöht. Ausserdem ist ein Druckaufbau im Behälter nur bei gleichzeitiger Entnahme für den Verbraucher möglich. Das bedeutet in der Praxis, dass nach dem Betanken - das bei einem unter dem Betriebsdruck liegenden Druck erfolgt - dem Verbraucher zunächst nur sehr kleine Mengen zugeführt werden können.

In dem AT Gebrauchsmuster 6266 ist eine Entnahmevorrichtung beschrieben, die diese Nachteile dadurch teilweise behebt, dass gasförmiges Gas in den Speicherbehälter eingeblasen wird. Dabei wird das Gas von einer Pumpe rückgeführt und in der unteren Region eines vertikalen Rohres aufwärts eingeblasen. Dabei findet zwischen dem eingeblasenen Gas und dem flüssigen Gas ein direkter Wärmeaustausch statt. Dabei tritt das Problem auf, dass sich im Verlauf der Entnahme eine der nicht abgegebenen Wärmemenge entsprechende Menge gasförmigen Gases im oberen Bereich des Speicherbehälters sammelt, ohne zur Verdampfung des flüssigen Gases etwas beigetragen zu haben. Insbesondere, wenn der Flüssigkeitsspiegel im Speicherbehälter abgesunken ist, gibt das eingeblasene Gas immer weniger Wärme an die Flüssigkeit ab. Ein derart schädliches Absinken des Flüssigkeitsspiegels kann aber bei einem Speicherbehälter großer horizontaler Erstreckung in einem Kraftfahrzeug auch örtlich stattfinden, wenn der Flüssigkeitsspiegel seine Lage verändert. Das passiert, wenn das Fahrzeug geneigt ist oder durch die Fliehkraft bei Kurvenfahrt. Weiters ist wegen der bei niederem Füllstand zu erwartenden Ansammlung von warmem Gas im oberen Bereich des Behälters ein zusätzlicher externer Druckspeicher erforderlich, um nach dem Betanken gleich die volle Motorleistung abrufen zu können.

Aus der DE 43 20 556 A1 ist es bekannt, verdampftes beziehungsweise angewärmtes Gas abzuzweigen und ohne vorherige Druckerhöhung durch einen weiteren Wärmetauscher im Inneren des Behälters und dann zum Verbraucher zu leiten. Die dem Inneren des Behälters auf diese Weise zuführbare Wärmemenge ist beschränkt und eine Erhöhung der Liefermenge für den Verbraucher und ein Anheben des Innendruckes nach dem Tanken nur langsam möglich.

### Aufgabe - Lösung

Es ist daher Aufgabe der Erfindung, die Entnahmevorrichtung eines Speicherbehälters so zu gestalten, dass diese Nachteile nicht auftreten. Es soll mit einer möglichst kleinen Rückführmenge ein Maximum an Flüssigkeit möglichst schnell verdampft werden, bei möglichst geringem apparativen Aufwand.

Erfindungsgemäß wird das dadurch erreicht, dass die Rückführleitung im Inneren des Speicherbehälters in Bodennähe einen weiteren Wärmetauscher bildet und im Gasraum des Speicherbehälters mit einer Ausblasöffnung endet. So wird zunächst der Wärmeinhalt des erwärmten eingeblasenen Gases dem flüssigen Gas durch Wärmeübertragung ohne Vermischung der Phasen bestenfalls vollständig zugeführt. Das dadurch verdampfende flüssige Gas erhöht den Druck im Behälter. An der Ausblasöffnung wird durch Vermischung nicht nur der restliche Wärmeinhalt abgegeben, sondern auch der Druck des rückgeführten Gases zur weiteren Erhöhung des Druckes im Behälter genutzt. Dadurch spricht der Druck im Inneren des Behälters sehr schnell auf Änderung der Förderhöhe beziehungsweise der Fördermenge der Pumpe an. Damit ist eine sehr schnelle Anpassung and variable Lastanforderung des Verbrauchers erreicht. Der vollständige Wärmeübergang erlaubt es auch, das gasförmige Gas mit höherer Temperatur einzublasen.

Vorzugsweise tritt die Rückführleitung in der oberen Region des Speicherbehälters in diesen ein (Anspruch 2). Dadurch wird ohne Rückschlagventil im kryogenen Bereich das Rückströmen fallweise in den weiteren Wärmetauscher gelangten flüssigen Gases verhindert.

Weil das Gas im flüssigen Aggregatszustand abgezogen wird, und wenn der Wärmetauscher so ausgelegt ist, dass es in ihm zur Gänze verdampft und im Wesentlichen auf Umgebungstemperatur erwärmt wird (Anspruch 3), wird erreicht, dass der vom Kompressor zu fördernde Massenstrom nur klein und der Leistungsbedarf des Kompressors daher minimal. Das trifft bei der relativ hohen Temperatur des eingeblasenen Gases zu. Es darf daran erinnert werden dass bei Wasserstoff und ähnlich leichten Gasen die Stoffwerte sich erheblich von denen von Wasser/Dampf unterscheiden. Der Unterschied der Stoffwerte zwischen den beiden Phasen flüssig und gasförmig ist bei ersteren wesentlich kleiner.

Vorteilhafterweise führt der Wärmetauscher als Primärmedium erwärmtes Wasser und ist von einer Wärmeisolation umgeben (Anspruch 4). Mit Wasser - bei einem Kraftfahrzeug mit Verbrennungskraftmaschine ist es deren Kühlwasser - als Primärmedium ist gemeint, dass es den Wärmetauscher füllt und vom flüssigen Gas durchströmte Rohre umgibt. So ist der Wärmeinhalt des Wassers im Wärmetauscher ausreichend, um nach dem Betanken ohne irgendwelche Hilfsmittel (zum Beispiel einen zusätzlichen Druckspeicher) gleich die volle Motorleistung abrufen zu können.

Die vorteilhaften Wirkungen der Erfindung erlauben es auch, unter Vermeidung eines eigenen Steuerventiles den Kompressor einfach in Abhängigkeit vom im Speicherbehälter herrschenden Druck aus- beziehungsweise einzuschalten (Anspruch 5). Bei Abfall des Druckes im Speicherbehälter wird der Kompressor eingeschaltet und bei Erreichen eines Maximaldruckes wird er wieder ausgeschaltet. Erfahrungsgemäß genügt hiefür eine Zweipunktregelung.

In einer bevorzugten Ausführungsform verläuft die Rückführleitung im Inneren des Speicherbehälters stromaufwärts des weiteren Wärmetauschers in einem Isolierraum, welcher Isolierraum mit dem Isolationsraum zwischen Innenbehälter und Aussenbehälter in Verbindung steht (Anspruch 6). Durch den Isolierraum wird bei Betriebsstillstand der Wärmeeintrag in das Innere des Behälters durch die Rückführleitung minimiert.

In einer bevorzugten Ausführungsform ist der Isolierraum von einem schräg abwärts verlaufenden Rohr gebildet, dessen inneres Ende verschlossen und dessen äusserer Rand mit dem Innenbehälter dicht verbunden, insbesondere verschweisst ist. Diese Lage des Rohres bildet einen langen und dadurch besonders wirksamen Isolierraum und einen Siphon, der verhindert, dass flüssiges Gas im isolierten Rohrteil steht. In einer besonders vorteilhaften Weiterbildung sind auch die Betankungsleitung und die Entnahmeleitung durch den Isolierraum ins Innere des Behälters geführt. So wird auch der Wärmeeintrag durch diese Leitungen minimiert und die technisch schwierige Durchführung dieser Leitungen durch die Wände der beiden Behälter an einer Stelle zusammengefasst. Das ergibt eine bedeutende Vereinfachung des Zusammenbaus.

### Beschreibung

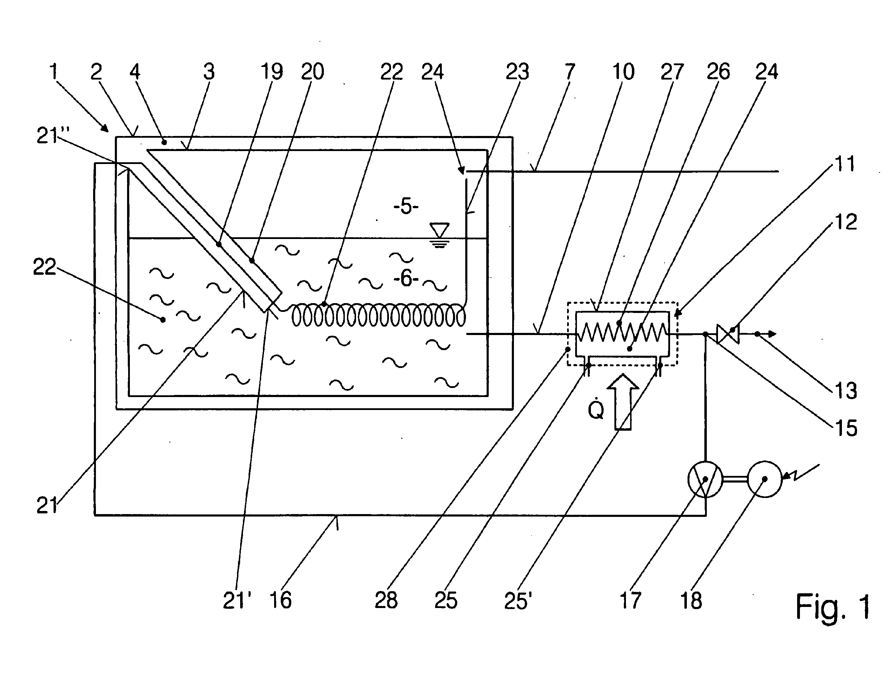

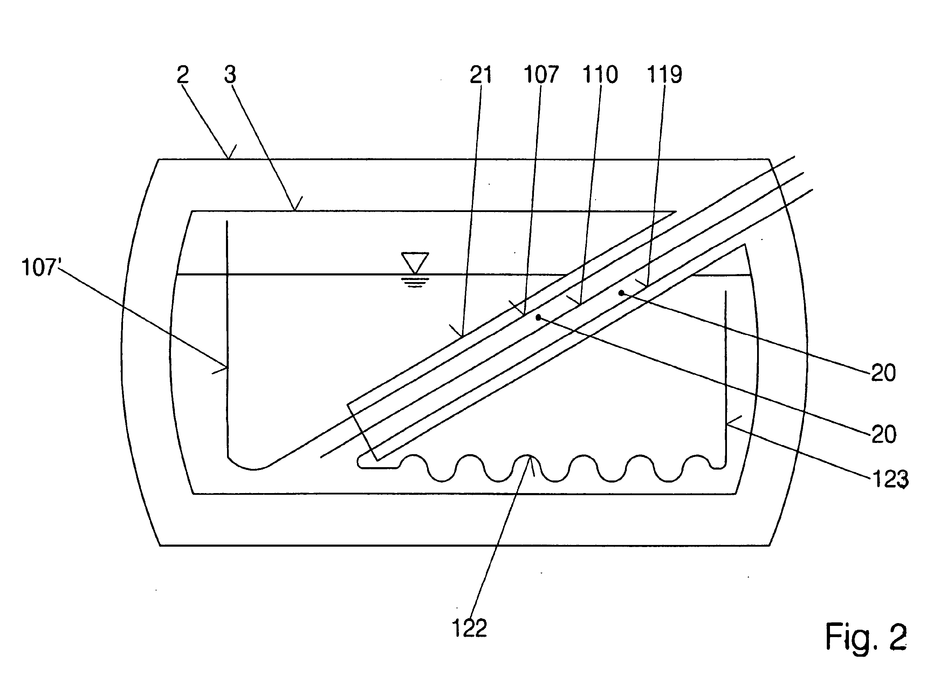

Im folgenden wird die Erfindung anhand einer schematischen Darstellung des erfindungsgemäßen Speicherbehälters (Fig. 1) beschrieben. Fig. 2 zeigt eine Ausführungsvariante.

In **Fig. 1** ist der Speicherbehälter insgesamt mit 1 bezeichnet. Er besteht aus einem Außenbehälter 2 und einem Innenbehälter 3, wobei der Zwischenraum 4 eine Superisolation enthält. In dem Innenbehälter 3 befindet sich ein tiefkaltes Gas, beispielsweise Wasserstoff, in einer unteren Zone 6 in flüssigem Aggregatszustand und darüber (5) in gasförmigem Aggregatszustand. Die Grenzfläche zwischen beiden ist der mit dem üblichen auf der Spitze stehenden Dreieck bezeichnete Flüssigkeitsspiegel. Der Flüssigkeitsspiegel ist horizontal, wenn nur die Schwerkraft auf die Flüssigkeit einwirkt. Durch die Einwirkung von in horizontaler Richtung wirkenden Trägheitskräften nimmt er eine geneigte Lage ein. Eine Betankungsleitung 7 ist nur angedeutet.

Die Entnahmevorrichtung besteht aus einem Entnahmezweig und einem Rückführzweig. Ersterer wird gebildet von einer aus dem Flüssigkeitsraum 6 des Innenbehälters 3 herausführenden Entnahmeleitung 10, einem Wärmetauscher 11, einem Ventil 12 und einer Leitung 13 zu einem nicht dargestellten Verbraucher. Der Verbraucher kann eine Verbrennungskraftmaschine oder eine Brennstoffzelleneinheit sein. Zwischen dem Wärmetauscher 11 und dein Ventil 12 ist eine Abzweige 15, von der eine Rückführleitung 16 über einen Kompressor 17 in das Innere des Behälters 3 hineinreicht, im Behälter eine innere Rückführleitung 19 bildet zu einem weiteren Wärmetauscher 22 führt. Der Wärmetauscher 22 ist eine vom rückgeführten Gas durchströmte Rohrschlange, die tief angeordnet ist, um immer von flüssigem Gas umspült zu sein.

Die innere Rückführleitung 19 endet stromabwärts des Wärmetauschers 22 in einer aufwärts in den Gasraum 5 führenden Leitung 23, aus deren oberem Ende 24 das rückgeführte Gas unter erhöhtem Druck in den Behälter 3 eintritt und so weiter zur Erhöhung der zum Verbraucher strömenden Gasmenge beiträgt. Die Ausströmung in den Gasraum 5 erfolgt unter geringem Druckverlust. Weil sie über dem höchsten Flüssigkeitsspiegel liegt, gelangt - von Ausnahmesituationen abgesehen - kein flüssiges Gas in den Wärmetauscher 22. Die Rückführleitung 16 führt stromabwärts des Kompressors 17 zur oberen Region des Behälters 1, wo sie zunächst in den Zwischenraum 4 und weiter in den Innenbehälter 3 geführt ist.

Um bei Stillstand der Anlage möglichst wenig Wärme über die Rückführleitung 16 ins Innere des Behälters einzutragen, ist deren letztes Stück 19 vor dem Wärmetauscher 22 durch einen Isolierraum 20 geführt. Der Isolierraum 20 ist eine Einstülpung des Innenbehälters, hier als abwärts geneigtes Rohr 21 ausgebildet, dessen inneres Ende 21' abgeschlossen und dessen äusserer Rand 21" mit dem Innenbehälter 3 verbunden, insbesondere verschweisst ist. Im Isolierraum 20 herrschen dieselben Bedingungen (zum Beispiel Vakuum) wie in dem Zwischenraum 4. Auch er kann mit einer darüber hinausgehenden Superisolation (zum Beispiel Reflexfolien und Abstandshalter) ausgestattet sein.

Der Wärmetauscher 11 ist ein Behälter 27, der die mit einem Wärme zuführenden Primärmedium gefüllten Primärraum bildet. Das Primärmedium, beispielsweise das von einer Umlaufpumpe zirkulierte Kühlwasser einer Verbrennungskraftmaschine (beide nicht dargestellt), wird dem Primärraum 24 über eine Leitung 25 zu- und von einer Leitung 25' abgeführt. Die Sekundärseite 26 ist von dem zunächst flüssigen Gas durchströmt. So können erhebliche Wärmemengen auf das zu verflüssigende Gas übertragen werden, so dass dieses nicht nur verdampft, sondern auch bis in die Nähe der Umgebungstemperatur, und darüber hinaus, erwärmt werden kann.

Dank der großen zuführbaren Wärmemenge ist der Kompressor keinen extremen Temperaturbedingungen mehr ausgesetzt. Wie noch zu erläutern, ist auch seine Leistungsaufnahme klein. Daher kann er von einfacher Bauart sein, etwa ein Membrankompressor. Er wird von einem Elektromotor 18 angetrieben, der in Abhängigkeit von dem im Speicherbehälter 1 herrschenden Druck aus- beziehungsweise eingeschaltet wird. Eine darüber hinausgehende Regelung ist nur zu seinem Schutz nötig.

Wenn das auf Umgebungstemperatur (ungefähr 300 Kelvin) erwärmte Gas seinen gesamten Wärmeinhalt an die Flüssigkeit abgibt, wobei es selbst wieder auf 30 Kelvin heruntergekühlt wird, muss nur wenig Gas eingeblasen werden und der Kompressor braucht nur für eine kleine Fördermenge ausgelegt sein. Entsprechend gering ist seine Leistungsaufnahme und sein Raumbedarf. Dank der Erfindung wird auch das Anlaufverhalten nach dem Betanken erheblich verbessert. Nach dem Betanken herrscht im Behälter in der Regel ein tieferer Druck als im Betrieb nötig, um das Gas mit ausreichendem Druck durch den Wärmetauscher 11 hindurch dem Verbraucher zuzuführen. Ein Druckaufbausystem sollte in der Lage sein, den Druck ohne Entnahme entsprechend zu erhöhen. Durch den Wärmeinhalt des auf der Primärseite 24 des Wärmetauschers 11 befindlichen Kühlwassers kann der Kompressor nach einem kürzeren Tankstop Gas von ausreichender Temperatur ansaugen und der Einblasvorrichtung 23 zuführen. Dadurch kommt die Verdampfung der Flüssigkeit im Behälter schnell in Gang und es kann nach dem Betanken mit voller Motorleistung weggefahren werden.

**Fig. 2** zeigt noch eine andere Konstruktion des Behälters, die sich von der Fig. 1 nur dadurch unterscheidet, dass die Behältereinbauten anders angeordnet sind. Gleiche Teile haben dieselben Bezugszeichen, anders verlegte Teile um 100 erhöhte. Hier sind alle im Behälter endenden Leitungen durch das den Isolierraum 20 bildende abwärts geneigte Rohr 21 geführt. Die Betankungsleitung 107 endet im Inneren des Behälters 3 in einem aufwärts in den Gasraum 5 führenden Rohrteil 107'. Die Entnahmeleitung 110 endet im Inneren des Behälters 3 in einem Siphon 110'. Die Rückführleitung 119 führt zum tief liegenden weiteren Wärmetauscher 122 und endet in dem in den Gasraum ragenden Rohrstück 123. Dadurch ist die schwierige Einführung aller Leitungen in dem Rohr 21 zusammengefasst und somit der Wärmeeintrag durch alle diese Leitungen minimiert. Ausserdem vereinfacht sich so der Zusammenbau des Behälters erheblich.

## Patentansprüche

1. Speicherbehälter für tiefkaltes Flüssiggas mit Entnahmevorrichtung, die aus einem Entnahmezweig und einem Rückführzweig besteht, wobei der Entnahmezweig von einer in den Behälter eintauchenden Entnahmeleitung (10) gebildet ist, die über einen Wärmetauscher (11) und eine Abzweige (15) zum Verbraucher führt und wobei als Rückführzweig eine Rückführleitung (16) von der Abzweige (15) über einen Kompressor (17) zu einer Einblasvorrichtung im Behälter führt, **dadurch gekennzeichnet, dass** die Rückführleitung (16) im Inneren des Speicherbehälters (1) in Bodennähe einen weiteren Wärmetauscher (22) bildet und im Gasraum des Speicherbehälters (1) mit einer Ausblasöffnung (23) endet.

2. Speicherbehälter mit Entnahmevorrichtung nach Anspruch 1, **dadurch gekennzeichnet, dass** die Rückführleitung (16) in der oberen Region des Speicherbehälters (1) in diesen eintritt.

3. Speicherbehälter mit Entnahmevorrichtung nach Anspruch 1, **dadurch gekennzeichnet, dass** der Wärmetauscher (11) so ausgelegt ist, dass das in flüssigem Aggregatszustand entnommene Gas im Wärmetauscher (11) zur Gänze verdampft und im Wesentlichen auf Umgebungstemperatur erwärmt wird und in diesem Zustand in die Rückführleitung (16) eintritt.

4. Speicherbehälter mit Entnahmevorrichtung nach Anspruch 3, **dadurch gekennzeichnet, dass** der Wärmetauscher (11) als Primärmedium erwärmtes Wasser führt und von einer Wärmeisolation (28) umgeben ist.

5. Speicherbehälter mit Entnahmevorrichtung nach Anspruch 1, **dadurch gekennzeichnet, dass** der Kompressor (17) in Abhängigkeit vom im Speicherbehälter (1) herrschenden Druck geregelt wird.

6. Speicherbehälter mit Entnahmevorrichtung nach Anspruch 1, **dadurch gekennzeichnet, dass** die Rückführleitung (16) im Inneren des Speicherbehäl-ters stromaufwärts des weiteren Wärmetauschers (22) in einem Isolierraum (20) verlauft, welcher Isolierraum (20) mit dem Zwischenraum (4) zwischen an Innenbehälter (3) und Aussenbehälter (2) in Verbindung steht.

7. Speicherbehälter mit Entnahmevorrichtung nach Anspruch 6, **dadurch gekennzeichnet, dass** der Isolierraum (20) von einem schräg abwärts verlaufenden Rohr (21) gebildet ist, dessen inneres Ende (21') verschlossen und dessen äusserer Rand (21") mit dem Innenbehälter (3) dicht verbunden, insbesondere verschweisst ist.

8. Speicherbehälter mit Entnahmevorrichtung nach Anspruch 6, **dadurch gekennzeichnet, dass** weitere Leitungen (107, 109) durch den Isolierraum (20) ins Innere des Behälters (3) geführt sind. (Fig.2)

## Claims

1. Storage container for low-temperature liquid gas having an extraction device which comprises a extraction branch and a return branch, the extraction branch being formed by an extraction line (10) which penetrates into the container and which leads via a heat exchanger (11) and a branch-off (15) to the consumer, a return line (16) leading as a return branch from the branch-off (15) via a compressor (17) to an injection device in the container, **characterized in that** the return line (16) forms, inside the storage container (1), near the bottom, a further heat exchanger (22) and in the gas space of the storage container (1) terminates in a blow-out orifice (23).

2. Storage container having an extraction device according to Claim 1, **characterized in that** the return line (16) enters the storage container (1) in the upper region of the latter.

3. Storage container having an extraction device according to Claim 1, **characterized in that** the heat exchanger (11) is designed so that the gas extracted in a liquid state of aggregation evaporates completely in the heat exchanger (11) and is heated essentially to ambient temperature and in this state enters the return line (16).

4. Storage container having an extraction device according to Claim 3, **characterized in that** the heat exchanger (11) carries heated water as a primary medium and is surrounded by heat insulation (28).

5. Storage container having an extraction device according to Claim 1, **characterized in that** the compressor (17) is regulated as a function of the pressure prevailing in the storage container (1).

6. Storage container having an extraction device according to Claim 1, **characterized in that** the return line (16) runs inside the storage container, upstream of the further heat exchanger (22), in an insulating space (20), which insulating space (20) is connected to the interspace (4) between the inner container (3) and outer container (2).

7. Storage container having an extraction device according to Claim 6, **characterized in that** the insulating space (20) is formed by a pipe (21) which runs obliquely downwards and of which the inner end (21') is closed and the outer margin (21'') is sealingly connected, in particular welded, to the inner container (3).

8. Storage container having an extraction device according to Claim 6, **characterized in that** further lines (107, 109) are routed through the insulating space (20) into the interior of the container (3) (Fig. 2).

## Revendications

1. Réservoir de stockage pour gaz liquéfié très froid avec un dispositif de prélèvement, qui a une branche de prélèvement et une branche de retour, dans lequel la branche de prélèvement est formée par une conduite de prélèvement (10) plongeant dans le réservoir et qui conduit au consommateur via un échangeur de chaleur (11) et un branchement (15), et dans lequel une conduite de retour (16) formant la branche de retour conduit du branchement (15) à un dispositif d'insufflation dans le réservoir via un compresseur (17), **caractérisé en ce que** la conduite de retour (16) forme un autre échangeur de chaleur (22) à proximité du fond à l'intérieur du réservoir de stockage (1) et se termine par une ouverture d'éjection (23) dans l'espace des gaz du réservoir de stockage (1).

2. Réservoir de stockage avec un dispositif de prélèvement selon la revendication 1, **caractérisé en ce que** la conduite de retour (16) entre dans le réservoir de stockage (1) dans la région supérieure de celui-ci.

3. Réservoir de stockage avec un dispositif de prélèvement selon la revendication 1, **caractérisé en ce que** l'échangeur de chaleur (11) est conçu de telle manière que le gaz prélevé à l'état liquide se vaporise entièrement et soit chauffé essentiellement à la température ambiante dans l'échangeur de chaleur (11) et pénètre dans cet état dans la conduite de retour (16).

4. Réservoir de stockage avec un dispositif de prélèvement selon la revendication 3, **caractérisé en ce que** l'échangeur de chaleur (11) conduit de l'eau chauffée comme fluide primaire et est entouré d'une isolation thermique (28).

5. Réservoir de stockage avec un dispositif de prélèvement selon la revendication 1, **caractérisé en ce que** le compresseur (17) est régulé en fonction de la pression régnant dans le réservoir de stockage (1).

6. Réservoir de stockage avec un dispositif de prélèvement selon la revendication 1, **caractérisé en ce que** la conduite de retour (16) s'étend dans une chambre isolante (20) en amont de l'échangeur de chaleur (22) à l'intérieur du réservoir de stockage, chambre isolante (20) qui est en communication avec l'espace intermédiaire (4) entre le réservoir intérieur (3) et le réservoir extérieur (2).

7. Réservoir de stockage avec un dispositif de prélèvement selon la revendication 6, **caractérisé en ce que** la chambre isolante (20) est formée par un tube (21) s'étendant en oblique vers le bas dont l'extrémité intérieure (21') est fermée et dont le bord extérieur (21") est assemblé de façon étanche, en particulier soudé, au réservoir intérieur (3).

8. Réservoir de stockage avec un dispositif de prélèvement selon la revendication 6, **caractérisé en ce que** d'autres conduites (107, 109) sont menées vers l'intérieur du réservoir (3) à travers la chambre isolante (20) (Fig. 2).
